# FASCICULE DE BREVET EUROPEEN

(11) **EP 0 644 451 B1**
(45) Date de publication et mention de la délivrance du brevet: **07.11.2001**
(21) Numéro de dépôt: 94401792.0
(22) Date de dépôt: 03.08.1994
(51) Int. Cl.: G02F 1/1335

(54) **Module d'éclairage pour instruments à cristal liquide**
Beleuchtungseinrichtung für Flüssigkristallinstrumente
Illumination module for liquid crystal instruments

(30) Priorité: 21.09.1993 FR 9311208
(43) Date de publication de la demande: 22.03.1995
(73) Titulaire: SEXTANT AVIONIQUE S.A., 92366 Meudon la Forêt Cédex (FR)
(72) Inventeur: Cordier, Maurice, F-75012 Paris (FR); Veislinger, Bernard, F-95620 Parmain (FR)
(74) Mandataire: Geismar, Thierry

(56) Documents cités:
- EP-A- 0 374 085
- EP-A- 0 420 072
- US-A- 4 425 604
- PATENT ABSTRACTS OF JAPAN vol. 12, no. 102 (P-684) 5 Avril 1988 & JP-A-62 234 126 (NEC HOME ELECTRONICS LTD.) 14 Octobre 1987

## Description

La présente invention concerne un module d'éclairage pour instruments à matrice à cristaux liquides, et plus particulièrement un tel module comprenant un boîtier comportant un fond et des parois latérales, ladite matrice fermant le boîtier sur sa face opposée au fond, et au moins un tube fluorescent étant disposé dans le boîtier à proximité du fond.

L'éclairage des écrans à matrice à cristaux liquides active ou non est généralement assurée par un ou plusieurs tubes fluorescents à cathodes froides ou chaudes selon les applications et les niveaux de luminance recherchés. Un des inconvénients de ces dispositifs d'éclairage réside dans la puissance qui leur est nécessaire alors que l'un des principaux avantages des écrans à matrice active est précisément leur très faible consommation. Ce problème devient crucial lorsque l'on utilise ces écrans dans des instruments de planche de bord d'aéronef où les environnements lumineux peuvent atteindre des niveaux très élevés. La puissance dissipée dans les instruments pour générer le niveau lumineux garantissant la lisibilité de l'écran dans ces conditions nuit à la fiabilité du matériel.

Jusqu'à présent, les fonds des boîtiers des modules d'éclairages connus étaient généralement plats et blancs. Un tel agencement présente toutefois l'inconvénient qu'une grande partie de la lumière est émise dans des directions où elle est inutile, ce qui est particulièrement le cas dans les utilisations en planche de bord où la personne appelée à prendre connaissance des informations affichées par l'instrument est assise en une position déterminée et précise par rapport à l'écran.

C'est une raison pour laquelle on a proposé dans le document US-A-4 425 604 un module d'éclairage conforme au préambule de la revendication1. Un tel agencement a pour effet de collimater la lumière provenant des tubes fluorescents dans la direction souhaitée. Il en résulte des pertes de lumière diminuée et par conséquent, à éclairement donné, une puissance nécessaire plus faible que dans les modules d'éclairages connus.

Un tel module ne fournit pas toutefois une vision totalement satisfaisante sous un angle positif.

La présente invention vise à pallier cet inconvénient.

A cet effet, l'invention a pour objet un module d'éclairage selon la revendication 1.

Ainsi, l'essentiel de la lumière est dirigé vers le haut.

Afin que la lumière émise soit le plus homogène possible dans la direction souhaitée, on peut prévoir de conformer le fond en une pluralité de surfaces cylindriques paraboliques dont les lignes foyers sont parallèles.

On décrira maintenant à titre d'exemple non limitatif un mode de réalisation particulier de l'invention en référence aux dessins annexés dans lesquels:

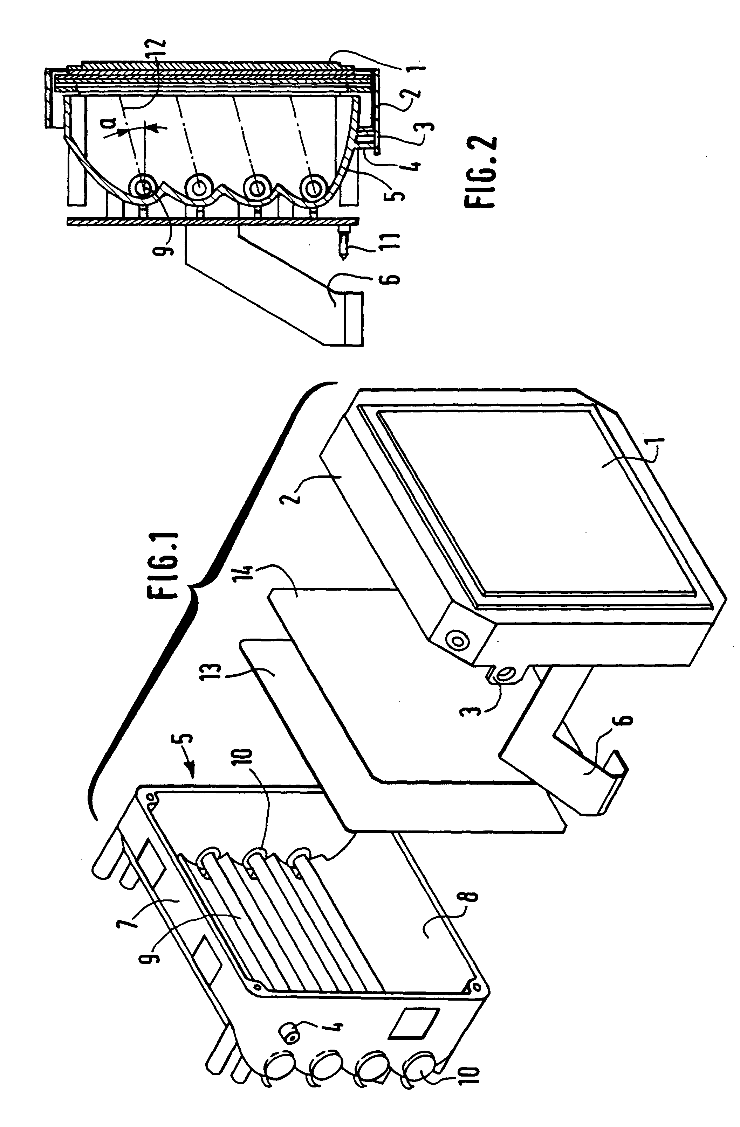

- la fig. 1 est une vue en perspective éclatée d'un écran comportant un module d'éclairage selon l'invention, et
- la fig. 2 est une vue en coupe de cet écran.

L'écran représenté aux dessins comprend une matrice 1 à cristaux liquides montée dans un cadre 2 de support. Le cadre 2 comporte des moyens de montage 3 coopérant des moyens homologues 4 sur un boîtier 5 qui sera décrit ci-après, ainsi que des branches de fixation 6 pour fixer l'écran sur une planche de bord.

Le boîtier 5 comporte des parois latérales 7, une paroi de fond 8 et est fermée par la matrice à cristaux liquides 1 du côté opposé au fond 8. Le boîtier 5 est par exemple constitué d'une pièce d'aluminium moulée revêtue par sublimation du côté intérieur du boîtier 5.

Le fond 8 est ici constitué de quatre surfaces cylindriques paraboliques dont les lignes foyers, c'est-à-dire les droites formées des foyers des sections droites du fond, sont parallèles entre elles et horizontales lorsque l'écran est monté. En d'autres termes, vu en coupe dans un plan vertical perpendiculaire à la matrice 1, le fond 8 forme une succession d'arcs de parabole raccordés entre eux.

Quatre tubes fluorescents 9 sont disposés de telle sorte que leurs axes coïncident avec les lignes foyers des quatre surfaces paraboliques et sont fixés et alimentés par l'intermédiaire de douilles 10 reliées par des fils appropriés à un connecteur 11.

Les plans de symétrie 12 des surfaces cylindriques paraboliques sont inclinées vers le haut par rapport au plan de la matrice 1 et font par conséquent un angle a, par exemple de l'ordre de 15°, avec l'horizontale. Les surfaces cylindriques paraboliques sont par ailleurs conformées de telle sorte que la lumière soit essentiellement émise dans un dièdre d'environ 20° de part et d'autre du plan 12.

On prévoit enfin un filtre 13 et un diffuseur 14 entre le boîtier 5 et la matrice 1 à cristaux liquides. Le diffuseur 14 reçoit d'une part le flux lambertien provenant directement des tubes 9, et d'autre part le flux collimaté réfléchi provenant des surfaces cylindriques paraboliques. Le diffuseur 14 est donc disposé à une distance du fond 8 du boîtier 5 tel que l'éclairement résultant de la somme de ces deux flux lumineux soit le plus homogène possible.

L'invention permet, en concentrant le flux lumineux dans la direction de l'observateur, de réduire la puissance électrique d'éclairage nécessaire.

## Revendications

1. Module d'éclairage pour instrument à matrice (1) à cristaux liquides, comprenant un boîtier (5) comportant un fond (8) et des parois latérales (7), ladite matrice fermant le boîtier sur sa face opposée au fond, et au moins un tube fluorescent (9) étant disposé dans le boîtier à proximité du fond, ledit fond étant réfléchissant et conformé en au moins une surface cylindrique parabolique, et l'axe dudit tube étant sensiblement confondu avec la ligne foyer de ladite surface, **caractérisé par le fait que** le plan de symétrie (12) de ladite surface cylindrique parabolique est incliné par rapport au plan de ladite matrice à cristaux liquides.

2. Module d'éclairage selon la revendication 1, dans lequel ledit fond est conformé en une pluralité de surfaces cylindriques paraboliques dont les lignes foyers sont parallèles.

3. Module d'éclairage selon l'une quelconque des revendications 1 et 2, comprenant un diffuseur (14) entre le boîtier et la matrice à cristaux liquides, à une distance du fond du boîtier telle que l'éclairement résultant de la somme du flux lambertien provenant directement du tube et du flux collimaté réfléchi par la surface cylindrique parabolique soit sensiblement homogène.

## Patentansprüche

1. Beleuchtungsmodul für Flüssigkristall-Matrizeninstrument (1) mit einem einen Boden (8) und Seitenwände (7) aufweisenden Gehäuse (5), wobei die besagte Matrize das Gehäuse auf seiner dem Boden gegenüberliegenden Seite schließt, und wobei mindestens eine Leuchtröhre (9) im Gehäuse in der Nähe des Bodens angeordnet ist, wobei der besagte Boden abstrahlend und zu mindestens einer zylindrischen parabolischen Fläche gestaltet ist, und wobei die Achse der besagten Röhre etwa in die Mittellinie der besagten Fläche übergeht, **dadurch gekennzeichnet, dass** die Symmetrieebene (12) der besagten zylindrischen parabolischen Fläche in Bezug auf die Ebene der besagte Flüssigkristallmatrix schräg verläuft.

2. Beleuchtungsmodul nach Anspruch 1, bei dem der besagte Boden in eine Vielzahl von zylindrischen parabolischen Flächen gestaltet ist, deren Mittellinien parallel verlaufen.

3. Beleuchtungsmodul nach einem der Ansprüche 1 und 2, mit einem Verteiler (14) zwischen dem Gehäuse und der Flüssigkristallmatrix, der in einem Abstand zum Boden des Gehäuses angeordnet ist, so dass die sich aus der Summe des direkt von der Röhre kommenden Lambert-Flusses und des von der zylindrischen parabolischen Fläche abgestrahlten Richtflusses ergebende Beleuchtung etwa homogen ist.

## Claims

1. A lighting module for an instrument with a liquid crystal matrix (1), comprising a casing (5) having a base (8) and side walls (7), the said matrix closing the casing on its face opposite the base, and at least one fluorescent tube (9) being disposed in the casing close to the base, the said base being reflective and shaped as at least one parabolic cylindrical surface, and the axis of the said tube being substantially merged with the focal line of the said surface, **characterised by** the fact that the plane of symmetry (12) of the said parabolic cylindrical surface is inclined with respect to the plane of the said liquid crystal matrix.

2. A lighting module according to Claim 1, in which the said base is shaped as a plurality of parabolic cylindrical surfaces whose focal lines are parallel.

3. A lighting module according to either one of Claims 1 and 2, comprising a diffuser (14) between the casing and the liquid crystal matrix, at a distance from the base of the casing such that the illumination resulting from the sum of the lambertian flux coming directly from the tube and the collimated flux reflected by the parabolic cylindrical surface is substantially homogeneous.
